(19) Europäisches Patentamt
European Patent Office
Office européen des brevets

(11) Veröffentlichungsnummer: **0 035 672**
**B1**

(12) # EUROPÄISCHE PATENTSCHRIFT

(45) Veröffentlichungstag der Patentschrift: **21.12.83**

(51) Int. Cl.³: **C 09 B 57/04,** C 08 K 5/34, C 09 D 11/02, C 09 D 3/00 // C07D403/04

(21) Anmeldenummer: **81101166.7**

(22) Anmeldetag: **19.02.81**

(54) **Neue Isoindolinfarbstoffe und deren Verwendung.**

(30) Priorität: **27.02.80 DE 3007301**

(43) Veröffentlichungstag der Anmeldung: **16.09.81 Patentblatt 81/37**

(45) Bekanntmachung des Hinweises auf die Patenterteilung: **21.12.83 Patentblatt 83/51**

(84) Benannte Vertragsstaaten: **CH DE FR GB IT LI**

(56) Entgegenhaltungen:
**FR - A - 2 135 259**
**FR - A - 2 386 588**
**FR - A - 2 412 589**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Lotsch, Wolfgang, Dr., Stettiner Strasse 32, D-6711 Beindersheim (DE)**
Erfinder: **Kemper, Reinhard, Dr., Viernheimer Weg 41, D-6900 Heidelberg (DE)**
Erfinder: **Bock, Gustav, Dr., Waldstrasse 16, D-6730 Neustadt (DE)**
Erfinder: **Elser, Wolfgang, Dr., Theodor-Heuss-Strasse 4, D-6706 Wachenheim (DE)**

**EP 0 035 672 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Neue Isoindolinfarbstoffe und deren Verwendung

Die Erfindung betrifft neue Isoindolinfarbstoffe und deren Verwendung.
Die neuen Farbstoffe haben die allgemeine Formel I

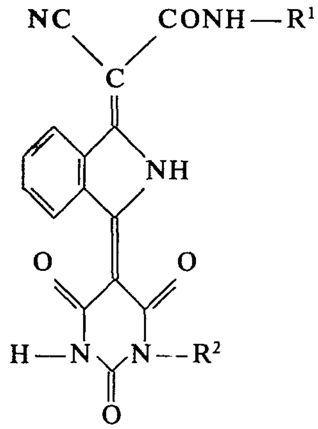

(I)

in der

$R^1$ für 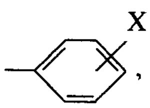 ,

$R^2$ für gegebenenfalls durch Chlor, Brom, Methyl, Ethyl, Methoxy und Ethoxy substituiertes Phenyl und

X für Wasserstoff, Methyl, Ethyl, Chlor oder Brom stehen.

Die neuen Farbstoffe der Formel I geben in Lacken, Kunststoffen und Druckfarben gelbe bis rote brillante Färbungen, die hohe Farbstärke, sehr gute Licht- und Wetterechtheiten bei guten Überlackierechtheiten aufweisen.

Die neuen Farbstoffe (I) übertreffen die in der DE-OS 2 814 526 beschriebenen darin, daß erstere in volltonnahen Färbungen in Lacken und in Kunststoffen im Licht nicht oder nur in geringem Umfang zum Verbräunen neigen.

Außerdem sind die Farbstoffe (I) denen des nächstliegenden Standes der Technik in der Regel in der Farbstärke und in der Reinheit des Farbtons überlegen.

Aufgrund ihrer Farbtöne sind die neuen Farbstoffe als Ersatz für schwermetallhaltige Pigmente wie Bleichromat und Bleimolybdat geeignet.

Von den Verbindungen der Formel I sind aus coloristischen Gründen folgende bevorzugt:

1) Farbstoffe der Formel (I), worin

$R^1$ für 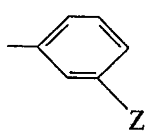 und

$R^2$ für 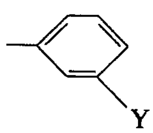 stehen, wobei

Z Wasserstoff bedeutet, wenn Y Chlor und Z Methyl bedeutet, wenn Y Wasserstoff ist.

2) Farbstoffe der Formel (I), in der

$R^1$ für 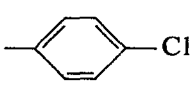 und

$R^2$ für 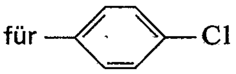 oder 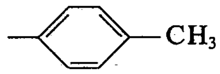

stehen.

Zu den erfindungsgemäßen Farbstoffen gelangt man, wenn man Diiminoisoindolin

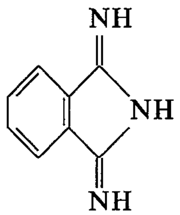

(II)

in an sich bekannter Weise mit einem Mol der Verbindung

$$NC-CH_2-CONH-R^1 \quad (III)$$

kondensiert und das Umsetzungsprodukt (Halbkondensationsprodukt) der Formel

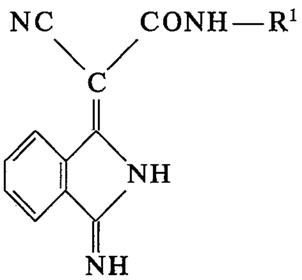

(IV)

mit einem Mol der Verbindung

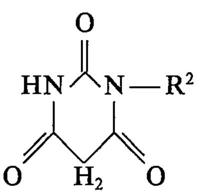

(V)

wobei

$R^1$ und $R^2$ die oben angegebene Bedeutung haben, kondensiert.

Die Kondensation des Diiminoisoindolins mit den Cyanmethylenaktiven Verbindungen der Formel III erfolgt vorzugsweise in Wasser oder in einem organischen Lösungs- oder Verdünnungsmittel, beispielsweise einem aliphatischen Alkohol mit 1 bis 4 C-Atomen, wie Methanol, Äthanol, Isopropanol, Butanol, ferner Glycolen oder Glycoläthern, offenkettigen oder cyclischen Amiden, wie Dimethylformamid, Dimethylacetamid oder N-Methylpyrrolidon oder in Mischungen der vorgenannten Lösungsmittel. Ein geringer Überschuß an Diiminoisoindolin kann vorteilhaft sein. Die Menge an Lösungs- und Verdünnungsmittel ist an sich unkritisch und wird bestimmt durch die Rührbarkeit bzw. Mischbarkeit des Reaktionsansatzes. Die Umsetzung erfolgt in der Regel bei Temperaturen unterhalb von 100° C.

Die Kondensation der Halbkondensationsprodukte der Formel (IV) mit der Barbitursäure der Formel (V) erfolgt in den vorstehend genannten Lösungsmitteln, vorzugsweise jedoch in aliphatischen Monocarbonsäuren wie Essigsäure oder Propionsäure oder in Gemischen von Carbonsäuren mit Dimethylformamid bei Temperaturen zwischen 50 und 150° C.

Sowohl die Halbkondensationsprodukte der Formel (IV) als auch die Pigmente der Formel (I) fallen in der Hitze aus und können durch Abfiltrieren und gegebenenfalls durch Waschen mit organischen Lösungsmitteln in reiner Form isoliert werden.

Durch geeignete Reaktionsführung gelingt es, auch beide Reaktionsschritte ohne Zwischenisolierung der Halbkondensationsprodukte der Formel (IV) im selben Reaktionsgefäß durchzuführen.

Die erhaltenen Rohprodukte können im allgemeinen als Pigmente verwendet werden. Sie können

aber auch nach an sich bekannten Formierungsverfahren in für ihren vorgesehenen Verwendungszweck optimale Pigmentformen überführt werden. In einigen Fällen gelingt es durch eine solche Formierung, besonders wertvolle Pigmentformen zu erhalten. Manchmal gelingt es durch Einhalten spezieller Reaktionsbedingungen direkt bei der Herstellung coloristisch besonders wertvolle Pigmentformen zu erhalten.

Die folgenden Beispiele sollen die Erfindung zusätzlich erläutern. Die im folgenden angegebenen Teile und Prozentangaben beziehen sich auf das Gewicht.

### Beispiel 1

30 Teile 1-[Cyan-N-(3'-methylphenyl)-carbamoyl-methylen]-3-imino-isoindolin und 21 Teile N-Phenylbarbitursäure werden unter kräftigem Rühren in 1000 Teile eines Gemisches aus Eisessig und Dimethylformamid (95 : 5 Teile) eingetragen und das Reaktionsgemisch 3 Stunden zum Sieden erhitzt. Das Reaktionsprodukt wird nach dem Abkühlen abfiltriert, mit Eisessig und Methanol gewaschen und getrocknet.

Ausbeute: 46 Teile des Pigments der Formel I mit

$R^1$ = 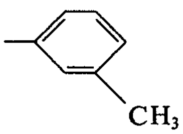 und

$R^2$ = 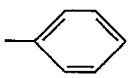

Das Produkt kann direkt zum Pigmentieren von Lacken und Kunststoffen verwendet werden. Die damit erzielten Färbungen zeichnen sich durch einen reinen, roten Farbton, sehr gute Licht- und Wetterbeständigkeit sowie gute Überlackierechtheit aus.

### Beispiele 2 bis 22

Man verfährt wie in Beispiel 1, setzt jedoch die durch den Rest $R^1$ charakterisierten Halbkondensationsprodukte der Formel IV mit den durch den Rest $R^2$ charakterisierten Arylbarbitursäuren um. Man erhält die entsprechenden Verbindungen der Formel I, die im Lack Färbungen mit vergleichbar guten Eigenschaften in den in der rechten Spalte angegebenen Farbtönen geben.

| Beispiel | $R^1$ | $R^2$ | Farbe |
|---|---|---|---|
| 2 | 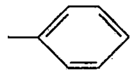 | 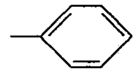 | orange |
| 3 | 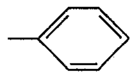 | 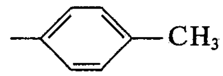 | orange |
| 4 | 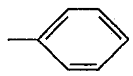 | 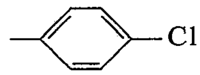 | orange |
| 5 | 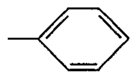 | 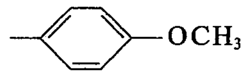 | orange |
| 6 | 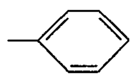 | 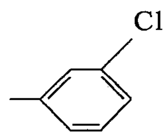 | rot |
| 7 | 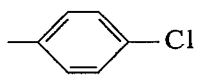 | 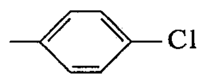 | orange |
| 8 | 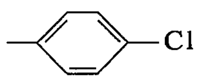 | 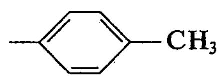 | orange |
| 9 | 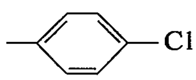 | 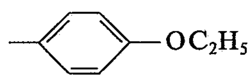 | orange |
| 10 | 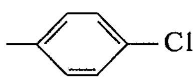 | 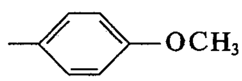 | orange |
| 11 | 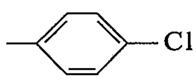 | 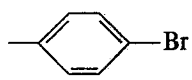 | orange |
| 12 | 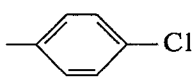 | 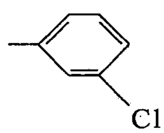 | rot |
| 13 | 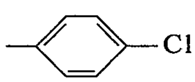 | 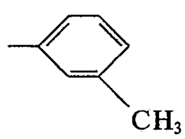 | orange |
| 14 | 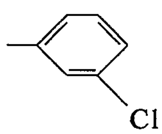 | 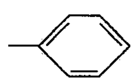 | orange |
| 15 | 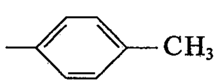 | 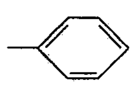 | rot |
| 16 | 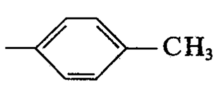 | 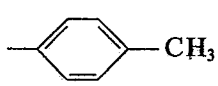 | rot |
| 17 | 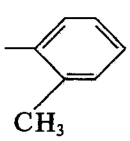 | 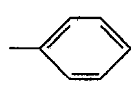 | rot |

**(Fortsetzung)**

| Beispiel | $R^1$ | $R^2$ | Farbe |
|---|---|---|---|
| 18 | 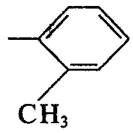 | 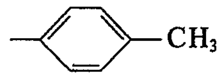 | orange |
| 19 | 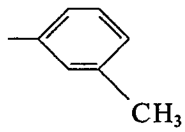 | 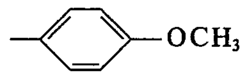 | rot |
| 20 | 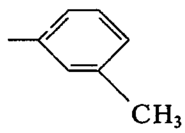 | 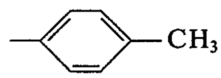 | rot |
| 21 | 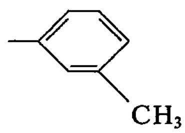 | 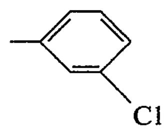 | rot |
| 22 | 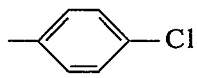 | 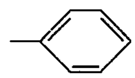 | orange |

Beispiel 23
(Anwendung)

a) Lack

10 Teile des nach Beispiel 1 erhaltenen Farbstoffes und 95 Teile Einbrennlackmischung, die 70% Kokosalkydharz (60%ig in Xylol gelöst) und 30% Melaminharz (ungefähr 55%ig gelöst in Butanol/Xylol) enthält, werden in einem Attritor angerieben. Nach dem Auftragen und einer Einbrennzeit von 30 Minuten bei 120°C werden rote Volltonlackierungen mit guter Licht- und Überspritzechtheit erhalten. Durch Zumischen von Titandioxyd werden rote Weißaufhellungen erhalten.

Verwendet man die in den Beispielen 2 bis 22 beschriebenen Feststoffe, so werden Lackierungen in ähnlichen orange bis roten Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195°C). Man erhält rote Extrudate, deren Färbung gute Lichtechtheit aufweist.

Verwendet man Mischungen aus 0,5 Teilen Farbstoff und 1 Teil Titandioxyd, so erhält man deckende, rote Färbungen.

Verwendet man die Pigmentfarbstoffe, die nach den Beispielen 2 bis 22 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine rote Toluol-Tiefdruckfarbe. Die mit dieser Farbe erhaltenen Drucke weisen gute Lichtechtheit auf.

Bei Verwendung der Farbstoffe aus den Beispielen 2 bis 22 werden ähnliche Ergebnisse erhalten.

**Patentansprüche**

1. Neue Isoindolinfarbstoffe der allgemeinen Formel

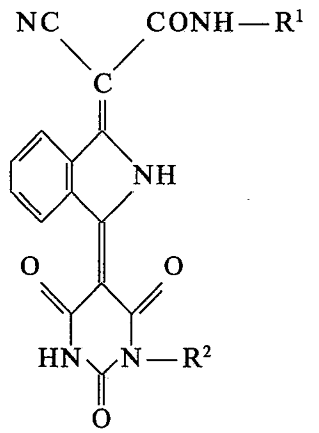

in der

$R^1$ für 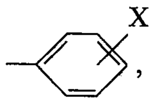,

$R^2$ für gegebenenfalls durch Chlor, Brom, Methyl, Ethyl, Methoxy und Ethoxy substituiertes Phenyl und

X für Wasserstoff, Methyl, Ethyl, Chlor oder Brom stehen.

2. Isoindolinfarbstoffe gemäß Anspruch 1, dadurch gekennzeichnet, daß in der Formel

$R^1$ für 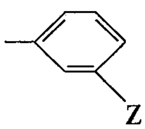 und

$R^2$ für 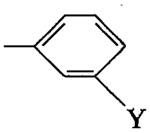 stehen, wobei

Z Wasserstoff bedeutet, wenn Y Chlor ist und Z Methyl ist, wenn Y Wasserstoff bedeutet.

3. Isoindolinfarbstoffe gemäß Anspruch 1, dadurch gekennzeichnet, daß in der Formel

$R^1$ für 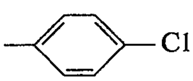 und

$R^2$ für 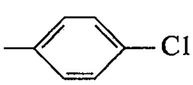 oder 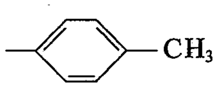

stehen.

4. Verwendung der Isoindolinfarbstoffe gemäß Anspruch 1, 2 oder 3 zum Pigmentieren von Lacken, Druckfarben und Kunststoffen.

**Claims**

1. A novel isoindoline colorant of the general formula

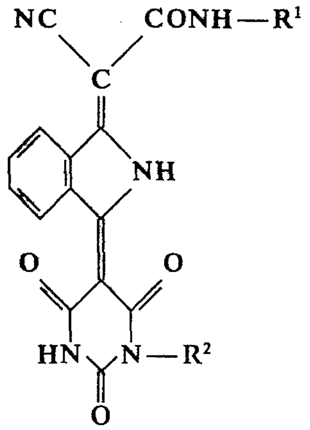

where

$R^1$ is 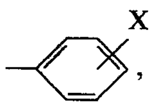,

$R^2$ is phenyl optionally substituted by chlorine, bromine, methyl, ethyl, methoxy and ethoxy, and
X is hydrogen, methyl, ethyl, chlorine or bromine.

2. An isoindoline colorant as claimed in claim 1, wherein in the formula

$R^1$ is 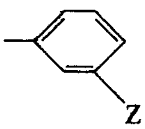 and

$R^2$ is 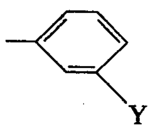

Z denoting hydrogen if Y is chlorine, and methyl if Y is hydrogen.

3. An isoindoline colorant as claimed in claim 1, wherein in the formula

$R^1$ is 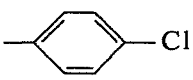 and

$R^2$ is 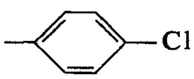 or 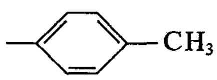

4. The use of an isoindoline colorant as claimed in claim 1, 2 or 3 for pigmenting surface coatings, printing inks and plastics materials.

**Revendications**

1. Nouveaux colorants iso-indoliniques de formule générale

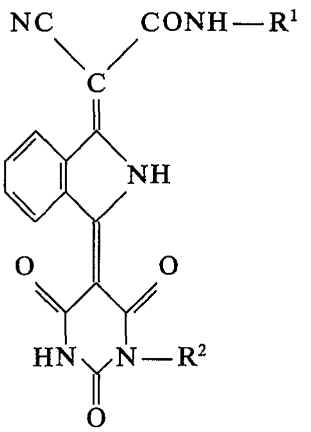

dans laquelle

$R^1$ est mis pour 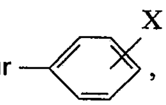,

$R^2$ est mis pour un phényle éventuellement substitué par un chlore, un brome, un méthyle, un éthyle, un méthoxy et un éthoxy, et

X est mis pour un hydrogène, un méthyle, un éthyle, un chlore ou un brome.

2. Colorants iso-indoliniques selon la revendication 1, caractérisé en ce que, dans la formule,

$R^1$ est mis pour 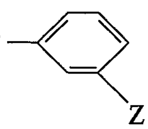 et

$R^2$ est mis pour 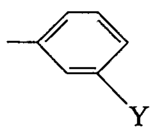

Z représentant un hydrogène lorsque Y est un chlore et Z représentant un méthyle lorsque Y est un hydrogène.

3. Colorants iso-indoliniques selon la revendication 1, caractérisés en ce que, dans la formule,

$R^1$ est mis pour 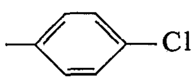 et

$R^2$ est mis pour 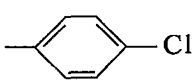 ou 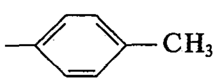

4. Utilisation des colorants iso-indoliniques selon l'une quelconque des revendications 1 à 3 pour la pigmentation de vernis et peintures, d'encres d'imprimerie et de matières synthétiques.